# DEMANDE DE BREVET EUROPEEN

(11) **EP 0 547 994 A1**
(43) Date de publication de la demande: **23.06.1993**
(21) Numéro de dépôt: 92480194.7
(22) Date de dépôt: 17.12.1992
(51) Int. Cl.: H04M 1/02, H04M 1/03, H04M 1/17

(54) **Téléphone dont le boîtier est issu d'un matériau en feuille prédécoupée et mise en volume**

(30) Priorité: 19.12.1991 FR 9116145
(71) Demandeur: Preziosa, Sylvian, F-06300 Nice (FR)
(72) Inventeur: Preziosa, Sylvian, F-06300 Nice (FR)
(74) Mandataire: Hautier, Jean-Louis

(57) **Abrégé**

L'invention a pour objet un téléphone dont le boîtier est issu d'un matériau en feuille prédécoupée et mise en volume.

Téléphone du type dont le combiné porte le clavier pour la formation des numéros caractérisé par le fait que ledit boîtier (1) est issu d'un matériau en feuille, ou analogue, prédécoupée et mise en volume, des moyens de fixation assurent la mise en place des moyens électroniques tels que haut-parleur, microphone, clavier, cordon d'alimentation ; le matériau en feuille est destiné à faire office de support publicitaire ou support d'annonces.

L'invention s'applique aux téléphones.

## Description

L'invention a pour objet un téléphone dont le boîtier est issu d'un matériau en feuille prédécoupée et mise en volume.

Le matériau en feuille peut être du carton compact ou autres matériaux analogues.

L'invention s'applique notamment aux téléphones qui sont des supports publicitaires et/ou qui ont une durée de vie brève et/ou qui sont des objets promotionnels.

Actuellement, dans les congrès, foires, expositions et autres manifestations, les participants et les exposants sont tous pourvus de téléphones sur leur stand. Ces téléphones sont loués avec l'emplacement des stands ; ces téléphones, loués pour de brèves périodes d'utilisation et par de nombreux utilisateurs, posent de nombreux problèmes.

Les téléphones sont parfois volés ou emportés par mégarde par les participants, les exposants ou par les visiteurs.

Les téléphones sont détériorés ce qui nécessite la réparation de la partie électronique et/ou de la partie plastique du boîtier ou son remplacement. Ces opérations coûtent cher.

Les téléphones, avant d'être loués, doivent être désinfectés, ces opérations sont également longues et onéreuses.

Le téléphone selon l'invention tend à éviter tous ces problèmes.

L'état de la technique concernant les boîtiers de téléphone est le suivant :
FR.A. 2.654.569 - L'invention concerne l'hygiène, judicieusement améliorée, sur les lieux publics de communication; entre autres - dans les cabines téléphoniques. Elle se présente sous la forme d'un cache auto-collant, enlevable, placé aux extrémités du combiné téléphonique (parties écouteur et micro) et ayant une fonction aseptique. Son intérêt est essentiellement d'ordre HYGIENIQUE et PUBLICITAIRE - d'utilité publique, le cas échéant - Il est universellement applicable en raison même de sa simplicité d'emploi et de son prix de revient négligeable.
FR.A. 2.598.874 - Le dispositif est constitué par au moins un couvercle en forme de cuvette élastiquement emboÎlable sur l'écouteur etlou le microphone du combiné dont il épouse la forme et dont le fond présente des perforations. Le bord intérieur du couvercle présente des surépaisseurs d'accrochage sur le combiné et le bord extérieur des surépaisseurs permettant le déboîtement respectivement par simple pression ou traction avec les doigts.
FR.A. 2.639.498 - Dispositif de protection hygiénique pour combinés téléphoniques caractérisé par une plaquette de protection hygiénique disposée sur les parties du combiné en contact avec le visage de l'usager.
FR.A. 2.527.402 - La présente invention concerne un appareil téléphonique orientable constitué d'un boîtier comportant sur sa face supérieure visible par l'utilisateur un combiné et un dispositif de commande, ledit appareil étant caractérisé en ce qu'au moins une partie de la face inférieure dudit boîtier peut reposer sur la face support d'un socle suivant au moins deux positions distinctes et en ce que ledit dispositif de commande peut être positionné sur ledit boîtier de manière à ce que le dispositif de commande soit orienté convenablement par rapport à l'utilisateur pour chaque position donnée possible du boîtier par rapport au socle.
FR.A. 2.490.903 - L'invention a trait à un combiné de poste téléphonique composé d'une coque inférieure, d'une coque supérieure, d'une capsule micro et d'une capsule réceptrice reliées par des fils à un cordon raccordant le combiné au boîlier. Ce combiné est caractérisé en ce qu'il comporte un circuit imprimé coopérant, d'une part, avec un connecteur encastrable ou enfichable et encliquetable disposé à l'une des extrémités du cordon et, d'autre part, avec un contact de court-circuitage du micro tout en assurant la liaison entre le cordon et les deux capsules.
FR.A. 2.480.050 - Le combiné téléphonique se compose de préférence de deux parties de boîtier qui forment un corps creux. Deux tubes relient les évidements prévus pour le microphone et l'écouteur. Cette configuration donne lieu à la formation d'une grande ouverture oblongue qui empêche les réactions acoustiques lors du fonctionnement. La partie poignée divisée permet une meilleure manipulation du combiné.

Le téléphone selon l'invention présente de nombreux avantages que l'on ne retrouve pas dans les téléphones actuels ou dans les brevets qui forment l'état de la technique.

Le téléphone selon l'invention est tu type combiné dont le combiné porte le cadran de numérotation. Le boîtier du téléphone est fabriqué à partir d'un matériau en feuille ou analogue. Le prix de revient est donc peu coûteux. Le téléphone est jetable et non réparable. Il est donc fabriqué à un coût très faible.

Le matériau en feuille fait office de support publicitaire. Le téléphone devient ainsi un objet promotionnel qui convient parfaitement pour ce type de manifestation (congrès, foires, expositions ...). Ce téléphone pratiquement jetable n'est pas récupéré parles organisateurs des manifestations, l'exposant garde pour lui le téléphone qui lui est fourni avec le stand. Le problème d'hygiène est ainsi résolu. L'organisateur ne répare pas et ne désinfecte pas les téléphones puisqu'il ne les récupère pas.

Ces téléphones promotionnels restent la propriété de leur destinataire. Le coût de fabrication desdits téléphones est payé par la publicité.

A cet effet, le téléphone selon l'invention est du type dont le combiné porte le clavier pour la formation des numéros; il est caractérisé par le fait que ledit boîtier est issu d'un matériau en feuille, ou analogue, prédécoupée et mise en volume, des moyens de fixation assurent la mise en place des moyens électroniques tels que haut-parleur, microphone, clavier, cordon d'alimentation. Le matériau en feuille est destiné à faire office de support publicitaire ou support d'annonces.

Selon un mode de réalisation, le boîtier est un combiné téléphonique.

Le combiné est fabriqué à partir d'un matériau en feuille carton, ou analogue, découpée et prépliée ou rainurée ou tracée suivant la forme désirée, les parties électroniques sont fixées par des moyens de fixation aux emplacements prédéfinis.

Le moyen de fixation des parties électroniques est le collage.

Les moyens de fixation des parties électroniques sont des languettes de blocage issues du matériau en feuille.

Le matériau en feuille comporte des découpes ou des trous pour le clavier, le haut-parleur et le microphone.

Selon un mode de réalisation préféré, le combiné téléphonique est réalisé dans un matériau en feuille découpée et prépliée dans un ou plusieurs flans.

Ledit flan est mis en volume pour former un fourreau. Leditflan est formé d'un ou plusieurs rabats qui forment le socle, le couvercle selon la forme à réaliser ; lesdits rabats sont pourvus de pattes d'assemblage et de fentes de blocage et de verrouillage.

Selon un autre mode de réalisation le ou les flans qui forment le fond, le couvercle, sont consolidés par un autre flan qui fait office d'armature.

Selon un autre mode de réalisation, le boîtier téléphonique est un combiné téléphonique avec clavier intégré ; la forme de l'ensemble est un prisme base triangle. Dans ce mode de réalisation, le boîtier est formé à partir d'un flan rectangulaire dont deux plis longitudinaux parallèles réalisent trois parties qui sont mises en volume et qui sont reliées entre elles par le bord extérieur des deux parties rabattues sur la partie centrale pour former la pyramide dont la base est un triangle ; les bords des parties rabattues l'une vers l'autre comportent des moyens d'assemblage et des moyens de verrouillage.

La partie centrale est pourvue, sur ses deux petits côtés, d'un rabat triangulaire qui forme une patte de fermeture de chaque côté du volume prismatique ainsi créé.

La partie centrale est percée de trous au niveau de ses deux petits côtés pour le passage du son du haut-parleur et du microphone.

Une des parties rabattues comporte un évidé pour autoriser l'accès au clavier. D'autres évidés sont prévus pour d'autres boutons de commande.

L'autre partie rabattue est plus particulièrement destinée à faire office de support publicitaire ou de support d'annonces.

Les dessins ci-joints sont donnés à titre d'exemples indicatifs et non limitatifs. Ils représentent un mode de réalisation préféré selon l'invention. Ils permettront de comprendre aisément l'invention.

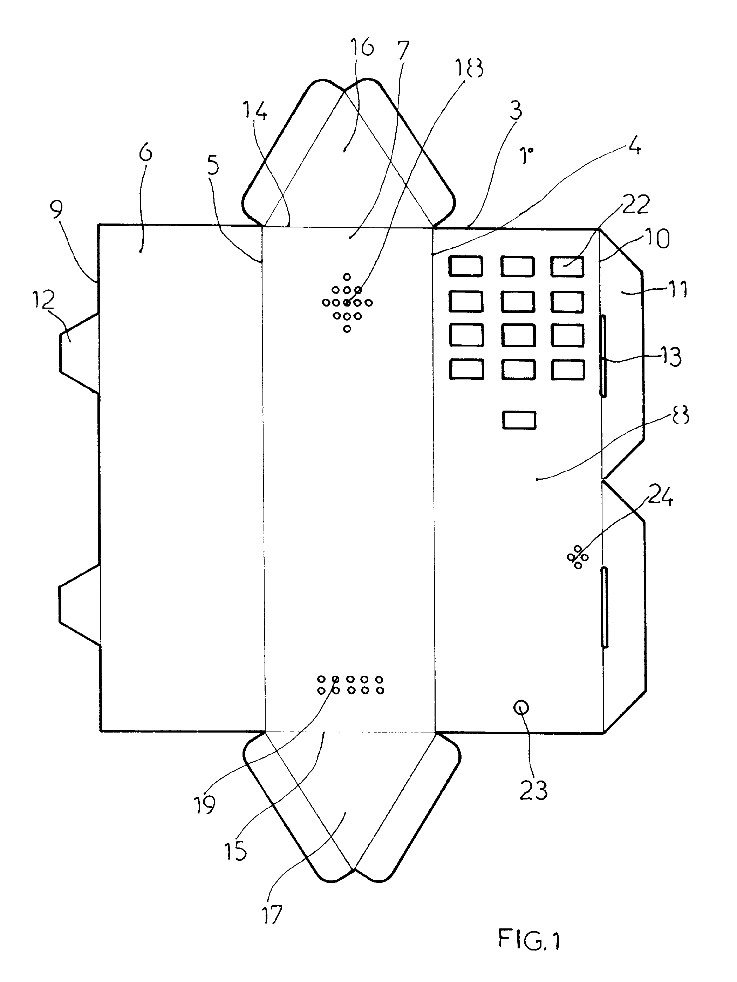

La figure 1 est une vue en plan d'un flan prédécoupé et préplié, pour réaliser un boîtier téléphonique tel qu'un combiné de forme prismatique à base triangle.

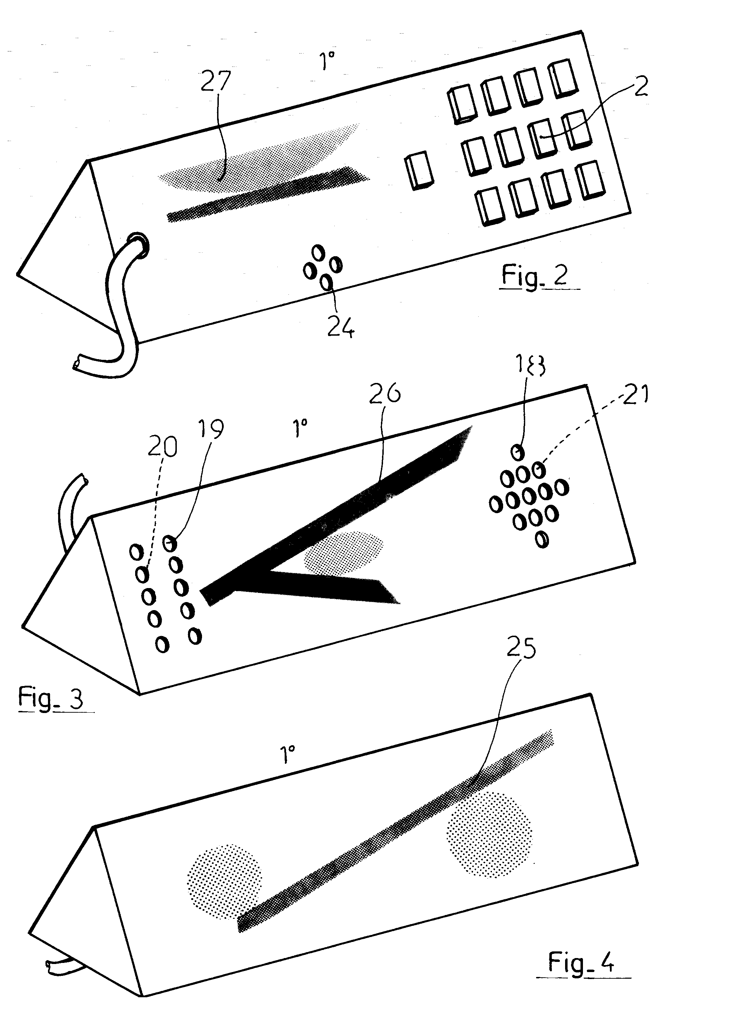

La figure 2 est une vue en perspective du boîtier selon la figure 1 vu du côté clavier.

La figure 3 est une vue en perspective du boîtier selon la figure 1 vu du côté haut-parleur / microphone.

La figure 4 est une vue en perspective du boîtier vu du côté de la troisième face particulièrement destinée à recevoir la publicité, ledit boîtier étant destiné à être un objet utilitaire promotionnel.

Le boîtier téléphonique 1 est un combiné téléphonique avec clavier intégré 2 ; la forme de l'ensemble est un prisme base triangle. Dans ce mode de réalisation, le boîtier est formé à partir d'un flan 3 rectangulaire dont deux plis longitudinaux 4, 5 parallèles réalisent trois parties 6, 7, 8 qui sont mises en volume et qui sont reliées en elles par le bord extérieur des deux parties rabattues sur la partie centrale pour former la pyramide dont la base est un triangle ; les bords 9, 10 des parties rabattues 6, 8 l'une vers l'autre comportent des moyens d'assemblage 11 et des moyens de verrouillage 12, 13.

La partie centrale 7 est pourvue, sur ses deux petits côtés 14,15, d'un rabat triangulaire 16, 17 qui forme une patte de fermeture du volume prismatique ainsi créé.

La partie centrale 7 est percée de trous 18, 19 au niveau de ses deux petits côtés 14, 15 pour le passage du son du haut-parleur 20 et du microphone 21.

Une des parties rabattues 8 comporte un évidé 22 pour autoriser l'accès au clavier 2. D'autres évidés 23, 24 sont prévus pour d'autres boutons de commande.

L'autre partie rabattue 6 est plus particulièrement destinée à faire office de support publicitaire ou de support d'annonces 25, 26, 27.

Selon ce mode de réalisation, les trois parties 6, 7, 8 ainsi que les pattes formées par les parties triangulaires 16, 17 font office de supports publicitaires ou de supports d'annonces.

### REFERENCES

1. Boîtier téléphonique
2. Clavier intégré
3. flan rectangulaire
4. pli longitudinal
5. pli longitudinal
6. partie rabattue
7. partie centrale
8. partie rabattue
9. bord
10. bord
11. moyens d'assemblage
12. moyen de verrouillage
13. moyen de verrouillage
14. petit côté
15. petit côté
16. rabat triangulaire
17. rabat triangulaire
18. trous
19. trous
20. haut-parleur
21. microphone
22. évidé
23. autre évidé
24. autre évidé
25. support d'annonce
26. support d'annonce
27. support d'annonce

## Revendications

1.- Téléphone du type dont le combiné porte le clavier pour la formation des numéros caractérisé par le fait
que ledit boîtier (1) est issu d'un matériau en feuille, ou analogue, prédécoupée et mise en volume, des moyens de fixation assurent la mise en place des moyens électroniques tels que haut-parleur (20), microphone (21), clavier (2), cordon d'alimentation ; le matériau en feuille est destiné à faire office de support publicitaire ou support d'annonces (25, 26, 27).

2. Téléphone selon la revendication 1 caractérisé par le fait
que le boîtier (1) est un combiné téléphonique.

3. Téléphone selon la revendication 1 caractérisé par le fait
que le combiné (1) est fabriqué à partir d'un matériau en feuille carton, ou analogue, découpée et prépliée ou rainurée ou tracée suivant la forme désirée, les parties électroniques (2, 20, 21) sont fixées par des moyens de fixation aux emplacements prédéfinis.

4. Téléphone selon la revendication 3 caractérisé par le fait
que le moyen de fixation des parties électroniques (2, 20, 21) est le collage.

5. Téléphone selon la revendication 3 caractérisé par le fait
que les moyens de fixation des parties électroniques (2, 20, 21) sont des languettes de blocage issues du matériau en feuille.

6. Téléphone selon la revendication 1 caractérisé par le fait
que le matériau en feuille comporte des découpes ou des trous (18, 19) pour le clavier (2), le haut-parleur (20) et le microphone (21).

7. Téléphone selon la revendication 1 caractérisé par le fait
que le combiné téléphonique (1) est réalisé dans un matériau en feuille découpée et prépliée dans un ou plusieurs flans (3).

8. Téléphone selon la revendication 7 caracérisé par le fait
que ledit flan (3) est mis en volume pourformer un fourreau. Ledit flan est formé d'un ou plusieurs rabats (16, 17) qui forment le socle, le couvercle selon la forme à réaliser ; lesdits rabats (16, 17) sont pourvus de pattes d'assemblage (11) et de fentes de blocage et de verrouillage (12, 13).

9.- Téléphone selon la revendication 8 caractérisé par le fait
que le ou les flans qui forment le fond, le couvercle, sont consolidés par un autre flan qui fait office d'armature.

10. Téléphone selon la revendication 1 caractérisé par le fait
que la forme de l'ensemble est un prisme base triangle.

11. Téléphone selon la revendication 10 caractérisé par le fait
que le boîtier (1) est formé à partir d'un flan rectangulaire (3) dont deux plis longitudinaux (4, 5) parallèles réalisent trois parties qui sont mises en volume et qui sont reliées entre elles par le bord extérieur (9, 10) des deux parties rabattues (6,8) sur la partie centrale (7) pour former la pyramide dont la base est un triangle ; les bords des parties rabattues (6, 8) l'une vers l'autre comportent des moyens d'assemblage (11) et des moyens de verrouillage (12,13).

12. Téléphone selon la revendication 11 caractérisé par le fait
que la partie centrale (7) est pourvue, sur ses deux petits côtés, d'un rabat triangulaire (16, 17) qui forme une patte de fermeture de chaque côté du volume prismatique ainsi créé.

13. Téléphone selon la revendication 12 caractérisé par le fait
que la partie centrale (7) est percée de trous (18, 19) au niveau de ses deux petits côtés (14, 15) pour le passage du son du haut-parleur (20) et du microphone (21) ; une des parties rabattues (8) comporte un évidé (22) pour autoriser l'accès au clavier (2) ; d'autres évidés (23, 24) sont prévus pour d'autres boutons de commande ; l'autre partie rabattue (6) est plus particulièrement destinée à faire office de support publicitaire ou de support d'annonces 25, 26, 27).
